# EUROPEAN PATENT SPECIFICATION

(11) **EP 2 117 392 B1**
(45) Date of publication and mention of the grant of the patent: **26.09.2012**
(21) Application number: 08720239.6
(22) Date of filing: 14.02.2008
(51) Int. Cl.: A47J 9/00

(54) **BATCHING DEVICE FOR PASTY FOOD PRODUCTS**
PORTIONIERVORRICHTUNG FÜR PASTÖSE NAHRUNGSMITTELPRODUKTE
DISPOSITIF DE DOSAGE POUR PRODUITS ALIMENTAIRES PÂTEUX

(30) Priority: 27.02.2007 IT TO20070145
(43) Date of publication of application: 18.11.2009
(73) Proprietor: Bisio Progetti S.p.A, 15100 Alessandria (IT)
(72) Inventor: BISIO, Stefano, I-15100 Alessandria (IT)
(74) Representative: Garavelli, Paolo
(86) International application number: PCT/IT2008/000091
(87) International publication number: WO 2008/105015

(56) References cited:
- DE-U1- 20 101 440
- FR-A- 959 550
- US-A- 4 074 833
- US-A- 4 544 083
- US-A- 4 649 714
- US-B1- 6 932 530

## Description

The present invention refers to a batching device for viscous or pasty food products, in particular for cheeses with soft paste.

The prior art provides for a high number of batching devices and delivering devices for cheeses. Such known devices, however, such as those described in particular in Swiss patent n. CH682714 in the name of SOCIÉTÉ DES PRODUITS NESTLÉ S.A. and in European Patent n. EP 1 541 073 in the name of DALTER ALIMENTARI S.P.A., are explicitly devised and realised for delivering and portioning cheeses with hard paste, such as for example Grana cheese or Parmigiano Reggiano cheese, and as such they are equipped with cutting devices adapted to grate the above cheeses. It is therefore clear that the above known batching devices and delivering devices for cheeses are instead not suitable and usable for delivering and portioning cheeses with soft paste. US-A-4544083 discloses a batching device according to the preamble of Claim 1.

Therefore, object of the present invention is solving the above prior art problems by providing a batching device for viscous or pasty food products that can be efficiently used for delivering and portioning cheeses with soft paste. EP-A1- 2 052 640, which is prior art pursuant to Art 54(3) EPC, discloses a batching device according to the preamble of Claim 1.

The above and other objects and advantages of the invention, as will appear from the following description, are reached with a batching device for viscous or pasty food products like the one disclosed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appear from the enclosed claims.

The present invention will be better described by some preferred embodiments, provided as a nonlimiting example, with reference to the enclosed drawings, in which:
- FIG. 1 shows a side median sectional view of a preferred embodiment of the batching device according to the present invention;

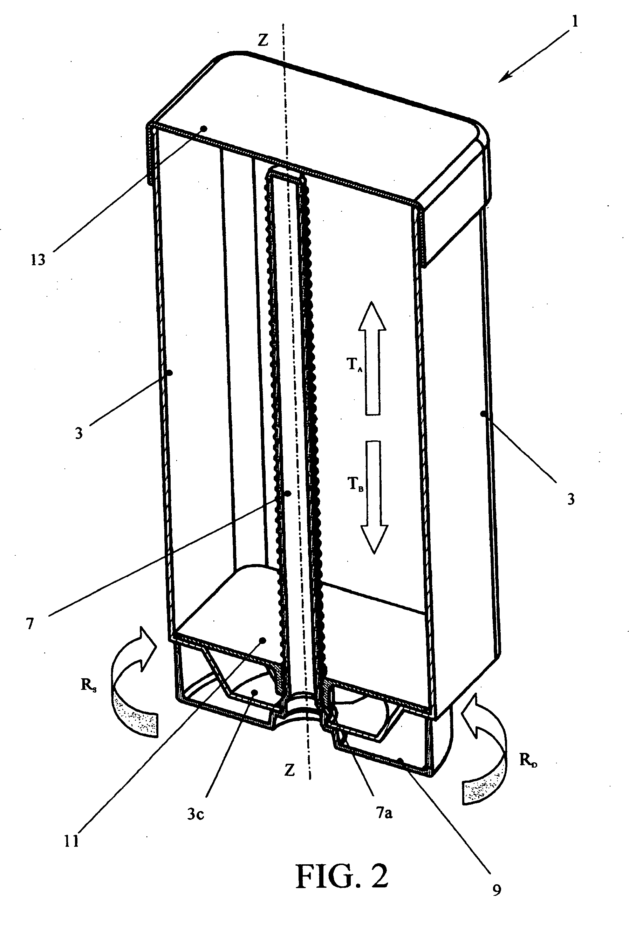

- FIG. 2 shows a median and perspective sectional view of the batching device of FIG. 1;

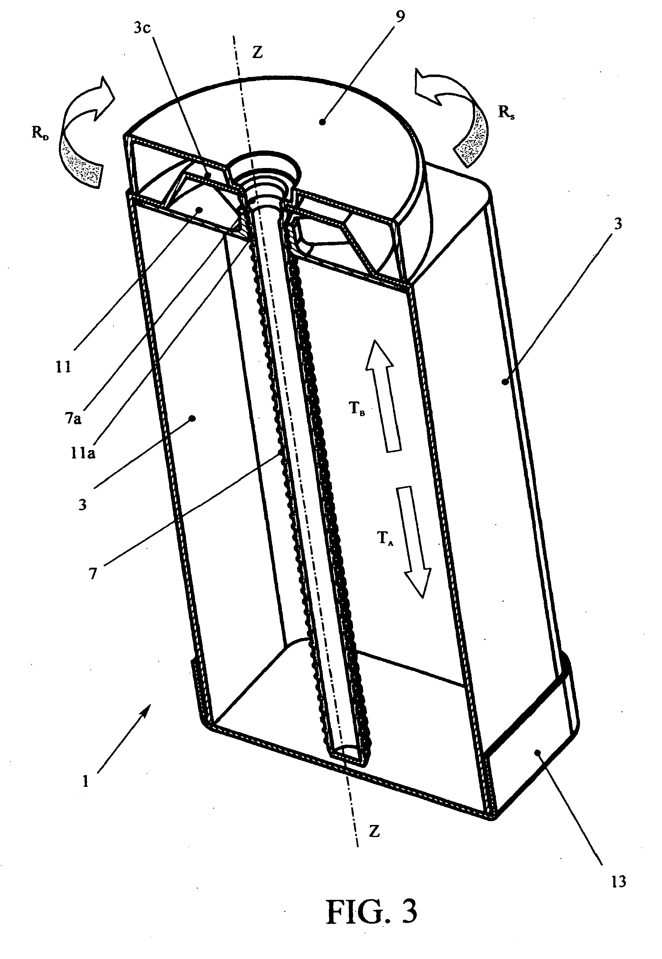

- FIG. 3 shows another side median and perspective sectional view of the batching device of FIG. 1;

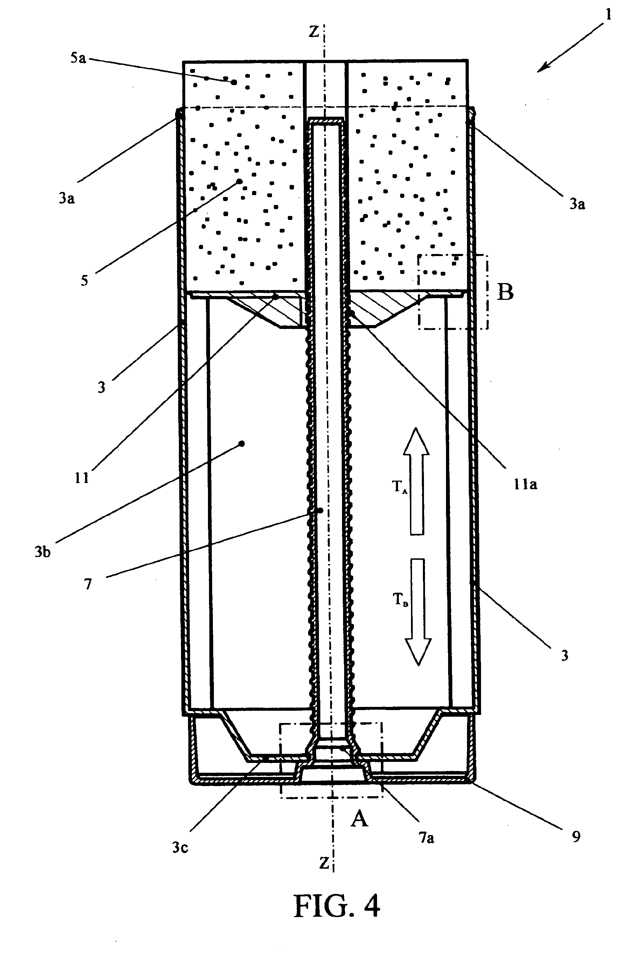

- FIG. 4 shows a media side sectional view of a preferred embodiment of the batching device according to the present invention in an operating step thereof;
- FIG. 5 shows an enlargement of the part contained in square A of FIG. 4, not according to the invention such as claimed;
- FIG. 6 shows a preferred variation of the part in FIG. 5 according to the invention such as claimed; and
- FIG. 7 shows an enlargement of the part contained in square B of FIG. 4.

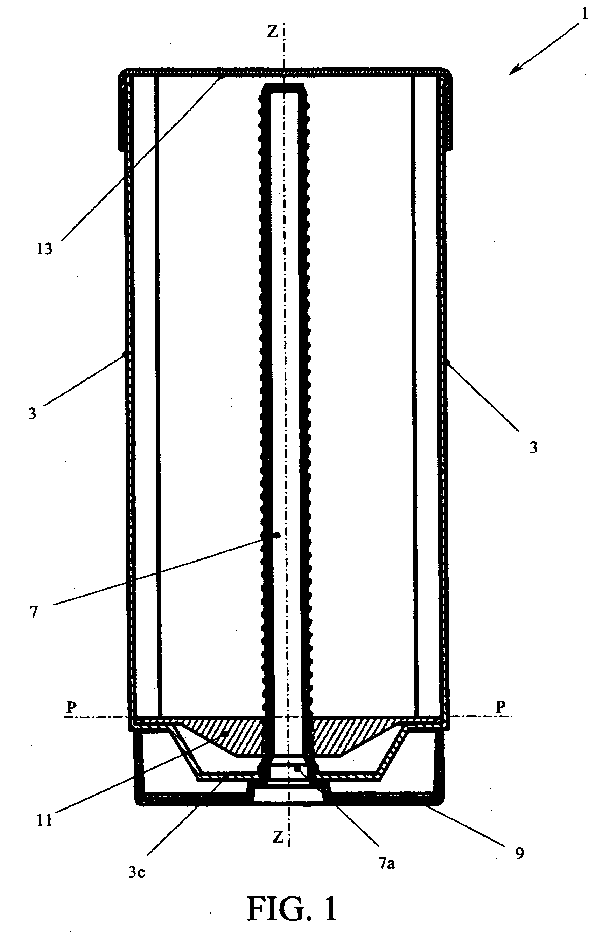

With reference to the Figures, it is possible to note that the batching device 1 according to the present invention comprises a containing body 3 adapted to contain therein a pasty or viscous product 5, such as for example at least one cheese with soft paste, to be delivered; the containing body 3 can obviously have any shape and be realised as any suitable material, such as for example plastic or glass. Preferably, the containing body 3 has a plan section, namely seen perpendicularly to its axis of symmetry shown in the Figures by axis Z, that is quadrangular or circular. Coaxially with axis Z, a threaded rod or screw 7 is arranged, having a first end 7a thereof integral with a control ring nut 9 external to the containing body 3 and also, preferably, having a rotation centre coaxial with axis Z: the rotation of the control ring nut 9 then rotates the threaded rod or screw 7. The threaded rod or screw 7 performs a screw-lead screw coupling with a piston 11 internal to the containing body 3, having a thrust plane (designated in FIG. 1 by straight line P) substantially perpendicular to axis Z: the piston 11 has therefore a substantially central threaded hole 11a that meshes with the threading of the threaded rod or screw 7. Obviously, the threaded rod or screw 7 can be realised inside it both as hollow (as shown as an example in the Figures) and as filled.

According to what is show in the Figures, one of the rotation directions (designated in the Figures by arrows R_{D} and R_{S}) of the control ring nut 9 therefore imposes, through the screw-lead screw coupling between threaded rod or screw 7 and threaded hole 11a of piston 11, a respective translation of the piston 11 inside the containing body 3 according to a first direction designated in the Figures by arrow T_{A} or a second direction opposite to this latter one designated by arrow T_{B} and according to a direction parallel to axis Z.

Obviously, if the containing body 3 has a quadrangular plan section, the rotary component of piston 11 imposed by the rotation R_{D} or R_{S} of the threaded rod or screw 7 is cancelled by the plan shape of piston 11 that copies the internal shape of the containing body 3. If, instead, the containing body 3 has a substantially circular plane section, the rotary component of piston 11 imposed by the rotation R_{D} or R_{S} of the threaded rod or screw 7 could be cancelled by inserting, inside the containing body 3, at least one longitudinal sliding guide (not shown) engaging the piston 11, and preventing its rotation inside the containing body 3, leaving only its translation component free.

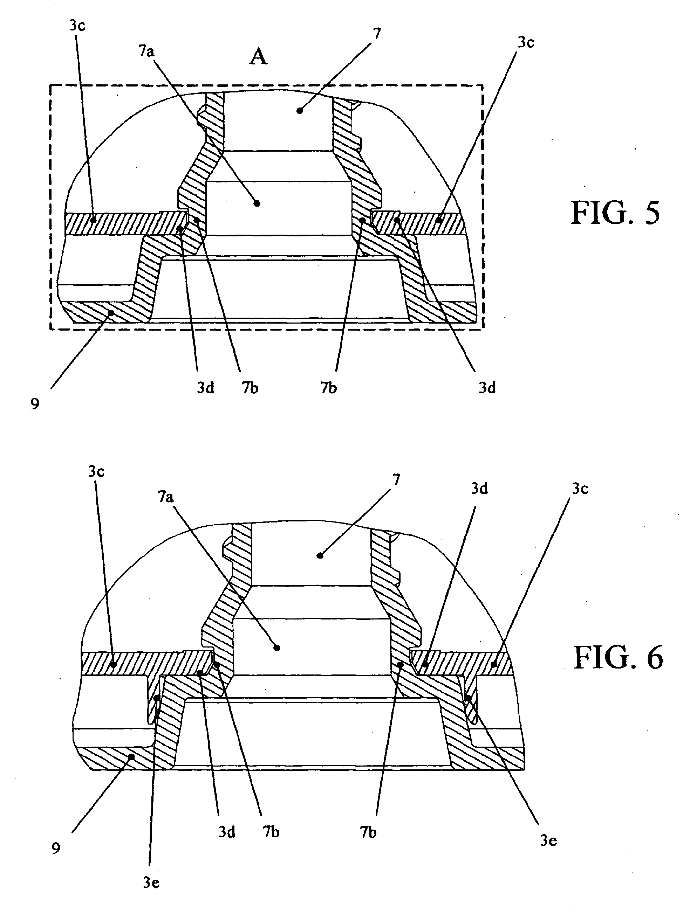

The rotation of the threaded rod or screw 7 is supported by at least one through-hole 3d obtained through a rear wall 3c of the containing body 3 (as shown in more detail, for example, in FIG. 5). To prevent an axial withdrawal of the assembly formed of threaded rod or screw 7 and control ring nut 9 from the through-hole 3d, the first end 7a is equipped with at least one thrust-supporting groove 7b for the insertion in the circular perimeter of the through-hole 3d. In a preferred variation thereof and according to the invention as claimed, like the one shown as an example in FIG. 6, the rear wall 3c of the containing body 3 is further equipped with at least one sealing lip 3e arranged on the perimeter around the through-hole 3d and slidingly adhering to the control ring nut 9.

The containing body 3 has therefore an open end 3a thereof through which the product 5 goes out of the containing body 3 pushed by piston 11 that translated along the first direction T_{A} and as far as the control ring nut 9 is rotated. The portion 5a of product 5 went out of the open end 3a of the containing body 3 can therefore be removed from the rest of the product 5 manually through a knife, a spatula or a spoon. Alternatively, the batching device 1 could be equipped with cutting means (not shown) of the portion 5a of product 5 went out from the open end 3a; in particular, such cutting means could be made as at least one guillotine-type blade arranged next to the open end 3a of the containing body 3 and whose translation direction is perpendicular to axis Z, so that the blade crosses the whole plane section of the containing body 3 to completely cut the product 5 according to a plane perpendicular to axis Z.

When the portioning operation of the product 5 contained inside the containing body 3 has ended, and in order to guarantee an adequate protection of the product 5 itself as regards external contaminating agents, such as dust or insects, the open end 3a can be closed through a removable closing plug 13.

The batching device 1 according to the present invention in a preferred embodiment thereof is aimed to be used one time only: therefore, it is aimed not to be used any more when the product 5 inside it has been delivered completely or in the desired amount.

Obviously, it is possible to realise the batching device 1 according to the present invention also in a variation thereof not for a single use and therefore adapted to be reused; in this case, when the product 5 contained inside the containing body 3 is finished or it is desirable to replace or integrate it with a new product, it is enough to suitably rotate the control ring nut 9 to translate the piston 11 along the second direction T_{B} and insert the new product 5 in the containing body 3 through its open end 3a. In this case, vacuum generated by the translation along the second direction T_{B} of piston 11 advantageously takes care of generating a suction effect of the product 5 possibly remained inside the containing body 3, that therefore follows the piston 11 when moving back, leaving space for inserting a new product.

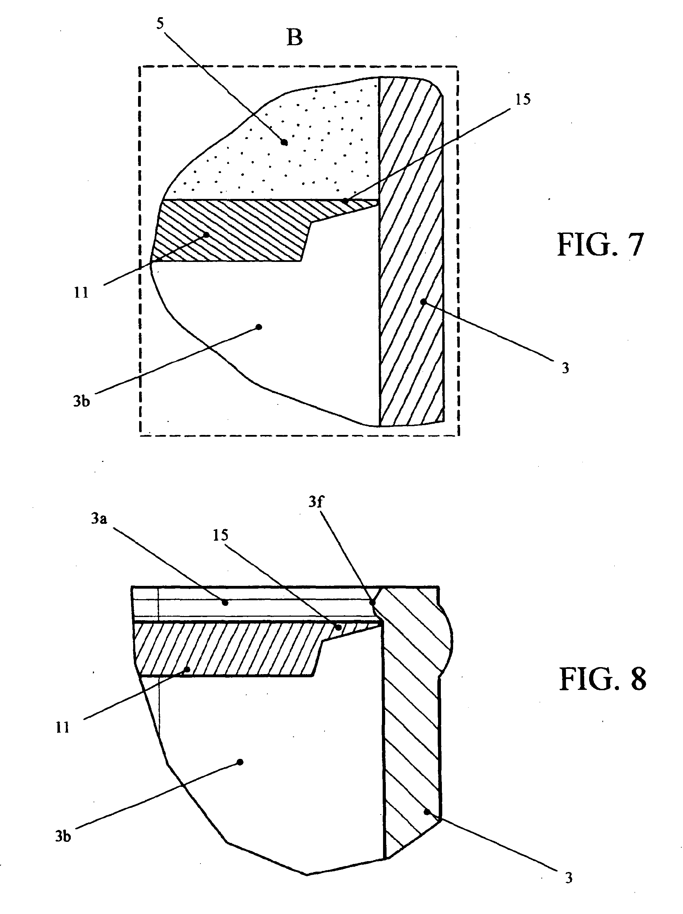

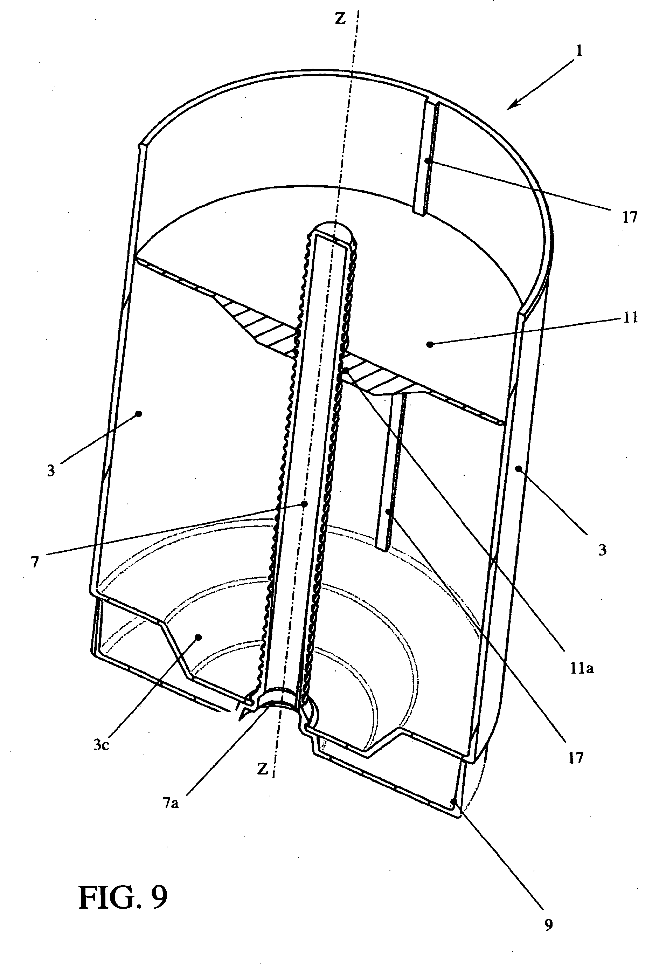

Given the viscous or pasty nature of the product 5, it is necessary to prevent that, when piston 11 translates, in particular when it moves along the first direction T_{A} pushing the product 5 outside the containing body 3 through the open end 3a, the product 5 can seep between piston 11 and internal wall of the containing body 3 getting to enter the hollow space 3b of the containing body 3 included between piston 11 and control ring nut 9, from which it would be difficult to remove it, generating serious inconveniences dealing with the hygiene of the batching device 1. In order to solve the above inconvenience, the piston 11 is equipped on its perimeter with at least one lip 15 (as shown in more detail in FIG. 7), preferably made of rubber or silicone, adapted to slidingly adhere to the internal wall of the containing body 3 to prevent that parts of the product 5 seep in the hollow space 3b. Similarly, to prevent that, when piston 11 translates, in particular when it moves along the first direction T_{A} pushing the product 5 outside the containing body 3 through the open end 3a, the product 5 can seep between threaded hole 11a and the threading of the threaded rod or screw 7 getting to go into the hollow space 3b of the containing body 3, between threaded hole 11a and the threading of the threaded rod or screw 7, it is provided for the insertion of suitable sealing means.

Some preferred embodiments of the invention has been described, but obviously they are prone to further modifications and variations within the scope of the claims. In particular, numerous variations and modifications, functionally equivalent to the previous ones, would immediately appear to the skilled people in the art, and fall within the scope of the invention as pointed out in the enclosed claims. For example, though in the preferred and shown embodiment of the batching device 1 according to the present invention the open end 3a and the control ring nut 9 are arranged next to two opposite ends of the containing body 3, it is clear that an alternative embodiment of the batching device 1 in which the open end 3a and the control ring nut 9 are arranged at the same end of the containing body 3 has no difficulties or the introduction of variations that, in light of what has been described, depart from the competences of any skilled person in the art, falling thereby within the scope of the present invention such as defined by the claims such.

## Claims

1. Batching device (1) for viscous or pasty food products, comprising a containing body (3) adapted to contain inside it a pasty or viscous product (5), a threaded rod or screw (7) coaxial with an axis of symmetry (Z) of said containing body (3) having a first end (7a) thereof integral with a control ring nut (9) external to said containing body (3), a piston (11) inside said containing body (3) performing a screw-lead screw coupling with said threaded rod or screw (7), said piston (11) having a central threaded hole (11a) meshing with a threading of said threaded rod or screw (7), said piston (11) being controlled to translate internally along said containing body (3) according to a first direction (T_{A}) and a direction parallel to said axis (Z) by a rotation of said control ring nut (9) in order to push at least one portion (5a) of said product (5) through an open end (3a) of said containing body (3), the rotation (R_{D}, R_{S}) of said threaded rod or screw (7) being supported by at least one through-hole (3d) through a rear wall (3c) of said containing body (3), said piston (11) being equipped on its perimeter with at least one lip (15) adapted to slidingly adhere to an internal wall of said containing body (3);
- sealing means being inserted between said threaded hole (11a) and said threading of said threaded rod or screw (7); and
- said rear wall (3c) of said containing body (3) being equipped with at least one sealing lip (3e) arranged on its perimeter around said through-hole (3d) and slidingly adhering to said control ring nut (9), **characterised in that** said first end (7a) is equipped with at least one thrust-supporting groove (7b) for an insertion of a circular perimeter of said through-hole (3d).

2. Batching device (1) according to claim 1, **characterised in that** said product (5) is at least one cheese with soft paste.

3. Batching device (1) according to claim 1, **characterised in that** said control ring nut (9) has a rotation centre coaxial with said axis (Z).

4. Batching device (1) according to claim 1, **characterised in that** said piston (11) has a thrust plane (P) substantially perpendicular to said axis (Z).

5. Batching device (1) according to claim 1, **characterised in that** said open end (3a) can be closed by means of a removable closing plug (13).

6. Batching device (1) according to claim 1, **characterised in that** said lip (15) is made of rubber or silicone.

7. Batching device (1) according to claim 1, **characterised in that** it is equipped with cutting means of said portion (5a) of said product (5) went out of said open end (3a).

8. Batching device (1) according to claim 7, **characterised in that** said cutting means comprise at least one guillotine-type blade arranged next to said open end (3a) of said containing body (3), said guillotine-type blade having a translation direction perpendicular to said axis (Z).

## Patentansprüche

1. Dosierer (1) für zähflüssige oder teigige Nahrungsmittel, mit einem Behälterelement (3), das dazu dient, ein zähflüssiges oder teigiges Produkt (5) zu enthalten, mit einer Gewindestange oder einer Schraube (7), die koaxial zu einer Symmetrieachse (Z) des genannten Behälterelements (3) liegt, dessen erstes Endstück (7a) ein Stück mit einer Steuerschraube (9) bildet, welche extern zum genannten Behälterelement liegt (3) liegt, mit einem Kolben (11) in dem genannten Behälterelement (3), der eine Schrauben-Mutterschrauben-Verbindung mit der genannten Gewindestange oder Schraube (7) bildet, der genannte Kolben (11) hat eine zentrale Gewindebohrung (11a), die in das Gewinde der genannten Gewindestange oder Schraube (7) eingreift, der genannte Kolben (11) wird so gesteuert, dass er sich durch eine Drehung der genannten Steuerschraube (9) intern längs des genannten Behälterelements (3) gemäß einer ersten Richtung (T_{A}) und einer parallelen Richtung zur Achse (Z) durch eine Drehung verschiebt, um mindestens einen Teil (5a) des genannten Produktes (5) durch ein offenes Endstück (3a) des genannten Behälterelements (3) zu schieben, die Drehung (R_{D}, R_{S}) der genannten Gewindestange oder Schraube (7) wird durch mindestens eine durchgehende Bohrung (3d) einer Rückwand (3c) des genannten Behälterelements (3) unterstützt, der genannte Kolben (11) ist am Umfang mit mindestens einer Lippe (15) ausgestattet, die dazu dient, gleitend an einer Innenwand des genannten Behälterelements (3) zu haften;
- Dichtvorrichtungen, die zwischen der genannten Gewindebohrung (11a) und dem genannten Gewinde der genannten Gewindestange oder Schraube (7) eingesetzt sind; und
- Die genannte Rückwand (3c) des genannten Behälterelements (3) ist mit mindestens einer Dichtlippe (3e) ausgestattet, die am Umfang der genannten durchgehenden Bohrung (3d) angeordnet ist und gleitend an der genannten Steuerschraube (9) haftet, und ist **dadurch gekennzeichnet, dass** das genannte erste Endstück (7a) mit mindestens einer Kugellagerrille (7b) für die Einführung eines runden Umfangs der genannten durchgehenden Bohrung (3d) ausgestattet ist.

2. Dosierer (1) gemäß Patentanspruch 1, der **dadurch gekennzeichnet ist, dass** das genannte Produkt (5) mindestens ein Weichkäse ist.

3. Dosierer (1) gemäß Patentanspruch 1, der **dadurch gekennzeichnet ist, dass** die genannte Steuerschraube (9) ein Drehzentrum hat, das koaxial zur genannten Achse (Z) liegt.

4. Dosierer (1) gemäß Patentanspruch 1, der **dadurch gekennzeichnet ist, dass** der genannte Kolben (11) eine Druckfläche (P) hat, die grundlegend senkrecht zur genannten Achse (Z) liegt.

5. Dosierer (1) gemäß Patentanspruch 1, der **dadurch gekennzeichnet ist, dass** das genannte offene Endstück (3a) durch einen abnehmbaren Verschlussstopfen (13) geschlossen werden kann.

6. Dosierer (1) gemäß Patentanspruch 1, der **dadurch gekennzeichnet ist, dass** die genannte Lippe (15) aus Gummi oder Silikon ist.

7. Dosierer (1) gemäß Patentanspruch 1, der **dadurch gekennzeichnet ist, dass** er mit Schneidvorrichtungen des genannten Teils (5a) des genannten Produktes (5) ausgestattet ist, das aus dem genannten offenen Endstück (3a) austritt.

8. Dosierer (1) gemäß Patentanspruch 7, der **dadurch gekennzeichnet ist, dass** die genannten Schneidvorrichtungen mindestens ein Fallbeilmesser einschließen, das an dem genannten offenen Endstück (3a) des genannten Behälterelements (3) angebracht ist, das genannte Fallbeilmesser hat eine Verschiebungsrichtung, die senkrecht zur genannten Achse (Z) liegt.

## Revendications

1. Doseur (1) pour produits alimentaires visqueux ou moelleux, comprenant un corps conteneur (3) apte à contenir à l'intérieur un produit (5) moelleux ou visqueux, une tige filetée ou une vis (7) coaxiale à un axe de symétrie (Z) dudit corps conteneur (3) ayant à sa première extrémité (7a) solidaire à une bague de commande (9) externe audit corps conteneur (3), un piston (11) interne audit corps conteneur (3) réalisant un accouplement vis-écrou avec ladite tige filetée ou vis (7), ledit piston (11) ayant un trou fileté (11a) central engrenant avec un filetage de ladite tige filetée ou vis (7), ledit piston (11) étant commandé pour transférer à l'intérieur le long dudit corps conteneur (3) selon une première direction (T_{A}) et une direction parallèle audit axe (Z) par une rotation de ladite bague de commande (9) pour pousser au moins une portion (5a) dudit produit (5) à travers une extrémité ouverte (3a) dudit corps conteneur (3), la rotation (R_{D}, R_{S}) de ladite tige filetée ou vis (7) étant supportée par au moins un trou passant (3d) à travers une paroi arrière (3c) dudit corps conteneur (3), ledit piston (11) étant doté sur le périmètre d'au moins un bord (15) apte à adhérer avec fluidité à une paroi interne dudit corps conteneur (3);
- moyens de tenue étant insérés entre ledit trou fileté (11a) et ledit filetage de ladite tige filetée ou vis (7); et
- ladite paroi arrière (3c) dudit corps conteneur (3) étant dotée d'au moins un bord de tenue (3e) disposé sur le périmètre autour dudit trou passant (3d) et avec fluidité adhérent à ladite bague de commande (9), **caractérisé par le fait que** ladite première extrémité (7a) est dotée d'au moins une gorge butée (7b) d'insertion d'un périmètre circulaire dudit trou passant (3d).

2. Doseur (1) selon la revendication 1, **caractérisé par le fait que** ledit produit (5) est au moins un fromage à pâte molle.

3. Doseur (1) selon la revendication 1, **caractérisé par le fait que** ladite bague de commande (9) a un centre de rotation coaxial audit axe (Z).

4. Doseur (1) selon la revendication 1, **caractérisé par le fait que** ledit piston (11) a un plan de poussée (P) substantiellement perpendiculaire audit axe (Z).

5. Doseur (1) selon la revendication 1, **caractérisé par le fait que** ladite extrémité ouverte (3a) peut être fermée au moyen d'un bouchon de fermeture (13) amovible.

6. Doseur (1) selon la revendication 1, **caractérisé par le fait que** ledit bord (15) est en caoutchouc ou silicone.

7. Doseur (1) selon la revendication 1, **caractérisé par** le fait d'être doté de moyens de coupe de ladite portion (5a) dudit produit (5) sortie de ladite extrémité ouverte (3a).

8. Doseur (1) selon la revendication 7, **caractérisé par le fait que** lesdits moyens de coupe comprennent au moins une lame à guillotine disposée à proximité de ladite extrémité ouverte (3a) dudit corps conteneur (3), ladite lame à guillotine ayant une direction de translation perpendiculaire audit axe (Z).
